# EUROPEAN PATENT APPLICATION

(11) **EP 2 544 097 A1**
(43) Date of publication of application: **09.01.2013**
(21) Application number: 11172926.5
(22) Date of filing: 06.07.2011
(51) Int. Cl.: G06F 13/38, H04L 12/40, H04L 29/06

(54) **Interfacing communications**

(71) Applicant: Vetco Gray Controls Limited, Bristol BS48 1BS (GB)
(72) Inventor: Dong, Ji, Nailsea, Bristol BS48 1BS (GB)
(74) Representative: Emerson, Peter James

(57) **Abstract**

A network communications system for interfacing, within the data-link layer, a non-IEEE 802 compatible data communications network with an IEEE 802 compatible data communications network, comprises: modems associated with each of the non-IEEE 802 compatible network and the IEEE 802 compatible network, said modems being configured to forward network data at the data-link layer, means for interfacing the non-IEEE 802 compatible network protocol communication within an IEEE 802 compatible physical layer so that the non-IEEE 802 compatible layer frame appears as an IEEE 802 compatible layer frame, and bridging means for interconnecting the IEEE 802 compatible network communication with the said interfaced non-IEEE 802 compatible network communication.

## Description

This invention relates to network communications systems, in particular to network communications systems suitable for use in underwater well facilities such as subsea hydrocarbon extraction well facilities.

### Background

Communications network functionality is commonly described using the well-known Open Systems Interconnection model (OSI reference model). According to this model, a communications system is subdivided into seven hierarchical "layers", where each layer provides services to the layer above it, and receives services from the layer below. The OSI model can be represented as follows:
7. Application layer-highest
6. Presentation layer
5. Session layer
4. Transport layer
3. Network layer
2. Data-link layer
1. Physical layer - lowest

For the purposes of the present invention, the lowest three layers, i.e. the physical layer, data-link layer and network layer are of most concern.

With many existing systems, such as underwater well facility communications systems, communication is primarily divided into two groups:
- IEEE 802 compatible communication systems such as Faster Ethernet, Optical Ethernet, etc, hereinafter referred to as "compatible communications" or "compatible protocol"; and
- Non-IEEE 802 communication systems, such as universal asynchronous receiver / transmitter (UART), universal serial bus (USB), CAN, etc, hereinafter referred to as "non-compatible communications" or "non-compatible protocol".

These two groups in general have different physical layers and data-link layers, which can make communication between the groups difficult. In particular, the delivery of information between the groups by data-link layer is difficult.

As is known in the art, the physical layer enables:
- establishment and termination of a connection to a communications medium (achieved for example by EIA/TIA-232, EIA/TIA-422);
- performing character encoding, transmission, receptions and decoding; and
- modulation or conversion between the representation of digital data in user equipment and the corresponding signals transmitted over a communications channel - these being signals operating over physical cabling such as copper or optical fibre, or over a radio link.

For the purposes of the following discussion, it should also be noted that:
- data exchange in the data-link layer is typically called data switching; and
- data exchange in the network layer is typically called data routing.

Naturally, exchanging information at a lower layer will be more efficient.

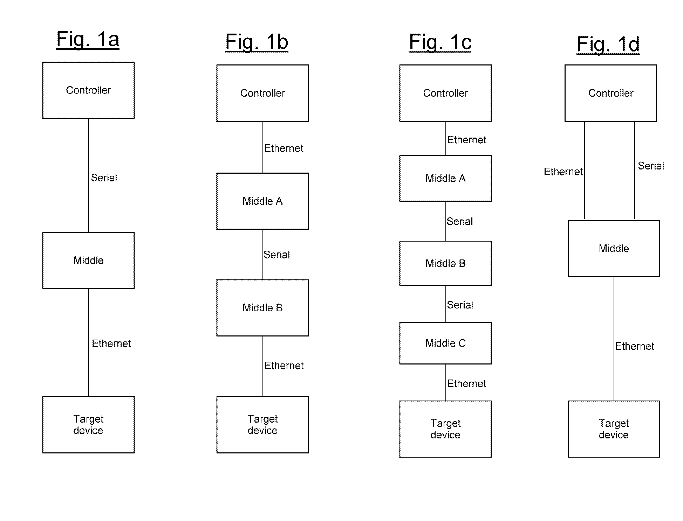

Figs. 1a-d respectively show four relatively simple exemplary scenarios that may occur in such communications systems, in which a combination of an IEEE 802 compatible protocol (Ethernet being shown as an example), and some other non-compatible communications protocol (serial being shown as an example), is required between a controller and target device, including at least one intermediate "middle" device, depending the level of information exchanged.

Conventionally, such scenarios have been implemented by moving protocol data transmission from the physical and data-link layers up to the network layer. For example, it is common to adopt a TCP/IP stack on the data-link layer, or to implement a data-link layer to interface a TCP/IP stack, so that all the information will exchanged at the network layer level. This technique is useful in addressing the scenarios shown in Figs. 1a to 1c for example. It is typical to adopt a TCP/IP stack on the compatible communications (e.g. Ethernet), and implement a point-to-point protocol (PPP) to interface the non-compatible interface (e.g. serial) to the TCP/IP stack. This will enable the information able to delivered from the controller to the target device.

However, when a redundant link is required, such as is shown between the controller and a middle entity in Fig. 1d for example, the situation is more complex. Here, if we follow the conventional solution,
1. For information going through Ethernet to the middle entity and then to the target device, the most efficient method uses data switching.
2. For information going through serial to the middle entity and then to the target device, data routing has to be used.
3. This is problematic for network management, because the network architecture becomes inconsistent. To make the network architecture consistent, one approach is to make the Ethernet method route data as well. However, there will be significant overheads if there are multiple Ethernet links to the middle device, because each network layer interface has at the least a unique ID, typically an IP address.

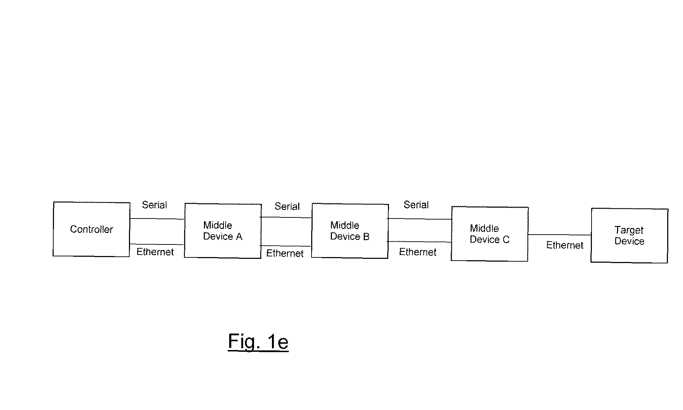

Fig. 1e shows a yet more complex scenario, with three middle devices located between the controller and the target device, each connected with redundant links. Using a solution as outlined above will involve four routers, and so making these devices suitable for "plug and play" is very difficult.

In addition, since conventional designs are based on the assumption that all control protocol is based on the network layer, many well-known protocols, for example ProfiNet, EtherCat, Powerlink, etc. are not supported, and all 802.1, 802.2-based control protocols can never be used with the system.

Due to the nature of routing, most network layer protocol is terminated between two routers. In the scenario of Fig. 1e for example, if redundant routing control is required between the controller and middle device C, say open shortest path first (OSPF), then both middle devices A and B will have to implement OSPF support, which will effectively double the effort put into developing the overall system.

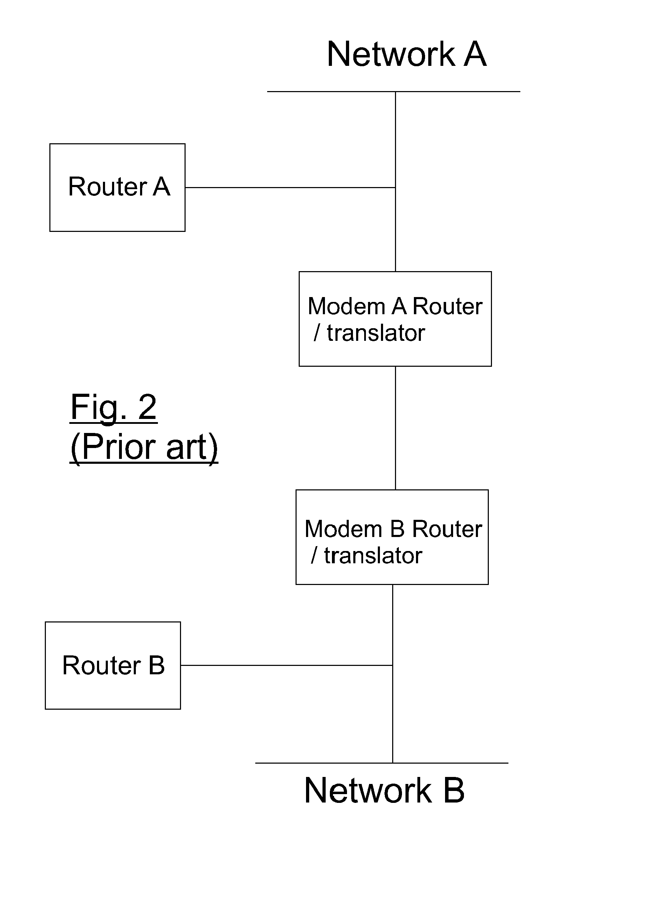

To take another, more specific, example, Fig. 2 shows a simple conventional network arrangement as used with underwater well facilities, with networks A and B being of different groups. If network A wants to talk to (i.e. send data to) network B, then:
i) the data must be routed to router A;
ii) the data are then routed to modem A;
iii) modem A must either translate the data package or behave as another router to relay the packages to modem B;
iv) modem B must either translate or route the information to router B; and
v) the data are finally routed to network B.

This approach will work. However, due to the functional limitations of such modem routers, there will generally be a very limited software support for newer protocols, such as virtual router redundancy protocol (VRRP), open shortest path first (OSPF) and spanning tree protocol (STP), etc. In addition, because of the two levels of routing involved in such protocols, the complexity of the required network topology may significantly increase. With the depth of modem involved in such systems, the network architecture could become messy.

In more detail, the problems can be summarised as follows:
1. Network topology: such conventional methods are adequate if the system uses a serial device as end equipment. However, in some areas, such as underwater well facility control for example, an Ethernet main communication is usually needed, with serial communications provided as back-up. In this case, the conventional design will put the serial device and Ethernet in different layers according to the OSI reference model, and hence the network topology will not be consistent.
2. Redundant control: with the conventional method, a typical set-up could be:
   -- Ethernet (left hand network) -- Router -- Serial -- Router -- Ethernet (right hand network) -- i.e. Ethernet communications are translated by a router into serial communications and back again by a second router. In underwater well facilities, not all regions can have Ethernet and most of time part of the communication line is serial via modem (e.g. variable speed, digital subscriber line (DSL), low speed, etc.).

With this set-up, a lot of redundant control is implemented in the data-link layer, for example STP, even with network layer redundant control. However, increasingly it is required to implement support in both routers, for example if there is another Ethernet system running in parallel. With the conventional method, having a redundant control protocol managing the serial link and Ethernet is difficult. Coping with the different modem communication without changing the software architecture is a problem. Using a PPP network layer protocol for example may partly solve the problem, however this will introduce another complexity of redundant control, and also likely to stop any distributed system working.
3. Network management: similarly, if it is required that the left-hand network and righthand network are provided in the same subnet, this is difficult to achieve.

It is an aim of the present invention to overcome these problems. This aim is achieved by treating any physical and data-link layer non-compatible communications as being within the compatible communications physical link.

The invention achieves in two steps:
1. Conversion of a non-IEEE 802 interface to an IEEE 802 compatible interface; and
2. Bridging of different IEEE 802 interfaces / compatible interfaces.

With the present invention, each modem will able to present as a fully managed soft-layer 2-switch or a soft-router depending on configuration. This will significantly reduce the complexity of the network topology, and make the system network architecture much neater.

The invention will also provide a very flexible environment to handle redundancy and prioritise forwarding when needed.

Although not so limited, it is envisaged that the present invention will have particular application in the field of enabling communications in underwater hydrocarbon fluid extraction facilities, such as subsea hydrocarbon wells. At present, increasingly Ethernet-based devices / sub-systems are being introduced to subsea control systems. However, there is still significant legacy usage of serial-based devices / sub-systems devices.

### Advantages of using the invention

There are various advantages that may be provided by the present invention, including:
1. A simplified design process which is split into two generic components:
   a) a software or electronic component to convert a non-802 standard network to an IEEE 802 compatible network; and
   b) A component which complies with the IEEE 802.3d standard.
   It should be noted that several operating systems have already implemented a similar driver / library, such as ONX and Linux, etc. With the ONX operating system for example, the "devn-fd" utility command will interface Ethernet with a serial interface, and the "brconfig" utility command will control a network pseudo bridge. This means that in practice it is a relatively simple matter to implement and test a serial-to-Ethernet converter.
   It is noted however that ONX has provided two implementations: a serial to Ethernet driver, and a soft 802.1 D compatible bridge. However the use of these two components together is considered new to the present invention.
2. The implementation of the present invention will significantly reduce the overheads of a network layer approach, such as PPP.
3. The inventive data-link layer approach does not stop any data-link layer protocol, which means most distributed operating systems (i.e. those operating systems which can run on different layers of the OSI 7 layer model) can run over the link.
4. The present invention enables quality service at the data-link layer, which is very useful for real-time control.
5. The present invention provides a significant saving in software development time.
6. The present invention provides a saving of time and difficulty when software testing.

The use of a bridge and "serial-Ethernet" in accordance with the present invention will significantly simplify the development of creating a logical link between compatible communications (e.g. Ethernet) and, for example, a serial / UART link at the data-link layer.

While implementing a serial to Ethernet interface at the data-link layer as with the present invention may sometimes take quite a lot of effort, it is considered that this increased effort will be more than outweighed by the advantages listed above, especially the increased convenience for network topology designing and flexibility for redundant control.

In accordance with a first aspect of the present invention there is provided a network communications system for interfacing, within the data-link layer, a non-IEEE 802 compatible data communications network with an IEEE 802 compatible data communications network, the system comprising:
modems associated with each of the non-IEEE 802 compatible network and the IEEE 802 compatible network, said modems being configured to forward network data at the data-link layer,
means for interfacing the non-IEEE 802 compatible network protocol communication within an IEEE 802 compatible physical layer so that the non-IEEE 802 compatible layer frame appears as an IEEE 802 compatible layer frame, and
bridging means for interconnecting the IEEE 802 compatible network communication with the said interfaced non-IEEE 802 compatible network communication.

In accordance with a second aspect of the present invention there is provided an underwater well facility comprising the network communications system according to the first aspect.

In accordance with a third aspect of the present invention there is provided a method for interfacing a non-IEEE 802 compatible data communications network with an IEEE 802 compatible data communications network, the non-IEEE 802 compatible data communications network and IEEE 802 compatible data communications network including protocol communication within their respective physical and data-link layers, the method comprising the steps of:
interfacing the non-IEEE 802 compatible data communications within an IEEE 802 compatible data communications physical layer so that the non-IEEE 802 compatible data communications frame appears as an IEEE 802 compatible data communications frame,
interconnecting the IEEE 802 compatible data communications network communication with the said interfaced non-IEEE 802 compatible data communications network communication using bridging means,
providing modems associated with each of the non-IEEE 802 compatible data communications and IEEE 802 compatible data communications networks, and forwarding data at the data-link layer via said modems.

The invention will now be described with reference to the accompanying drawings, in which:
Figs. 1a-e schematically show various network scenarios;
Fig. 2 schematically shows a conventional network arrangement;
Fig. 3 schematically shows the physical and data-link layers of a communications system in accordance with an embodiment of the present invention;
Fig. 4 schematically shows a hardware implementation of the present invention;
Fig. 5 schematically shows an alternative to the implementation of Fig. 4, achieved by software virtualisation;
Figs. 6a-e schematically show the scenarios of Fig. 1 as treated in accordance with the present invention;
Fig. 7 schematically shows an exemplary network arrangement in accordance with the present invention;
Fig. 8 schematically shows the functional (logical) arrangement of the network arrangement of Fig. 7; and
Fig. 9 shows an embodiment of the present invention achieved by software virtualization on a variable speed copper modem.

As mentioned above, the present invention achieves in two steps:
1) The interfacing of a non-compatible (e.g. serial) device with a compatible (e.g. Ethernet) device, so that the non-compatible device looks like a compatible device ("serial-over-Ethernet").
2) The creation of a bridge to interconnect the non-compatible (e.g. serial-over-Ethernet) and compatible devices, bringing the non-compatible device on to the compatible (e.g. Ethernet) bus.

For the sake of example, the following discussion will centre on Ethernet as the compatible communication protocol, and UART / serial as the non-compatible communications protocol, noting that the present invention is not so limited.

To achieve step 1 - interfacing between serial and Ethernet:
According to an embodiment of the present invention, an adoption sub-layer is used between the UART / serial physical layer and the Ethernet MAC layer.

One possible implementation is to use 802.3 MAC framing on top of a UART / serial device, this will make the serial stream look like an Ethernet stream.

This functionality may be implemented either as a System on Chip (SoC) and converting the serial transmission to a Media Independent Interface (Mll) at hardware level, or by software virtualization implemented by software running on a generic microcontroller. These embodiments, i.e. hardware and software implementations, are described in more detail below.

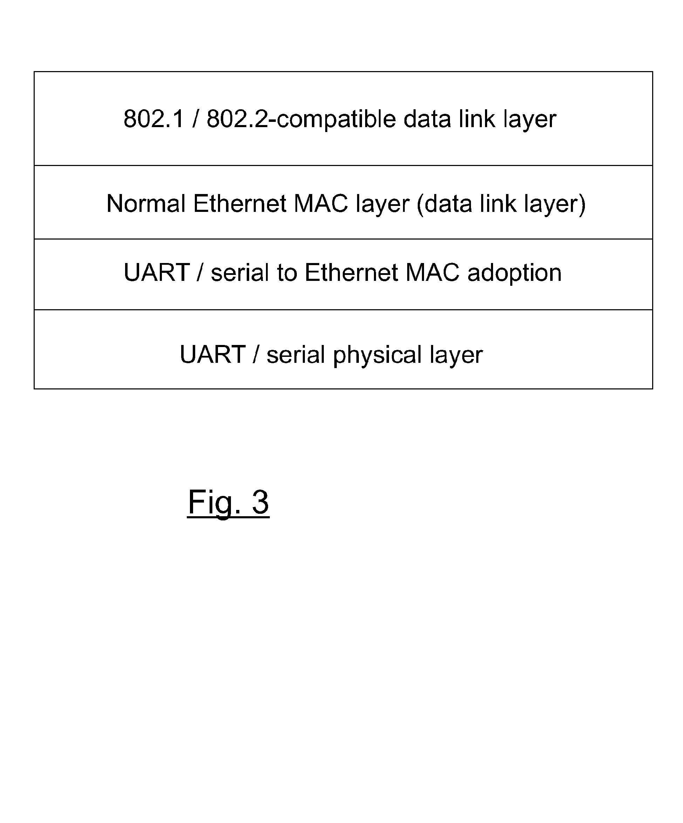

Fig. 3 schematically illustrates the bottom layers of the layer structure in accordance with the present invention described above. As can be seen from Fig. 3, the UART / serial physical layer is lowest, followed by a UART / serial to Ethernet MAC adoption layer, a normal Ethernet MAC layer (data-link), and the uppermost layer shown is a 802.1 / 802.2-compatible data-link layer.

Step 2 - bridging through different interfaces:
If using a hardware implementation, e.g. Step 1 is achieved using an SoC solution, an "off the shelf" ASCI switch chip with an Mll interface may be used to directly interface with the component built in Step 1.

If instead using a software virtualization implementation in Step 1, a 802.1 D-compatible soft / pseudo bridge may be used to effect the necessary functions. A software adoption component may be created to convert non-Ethernet communication to Ethernet compatible communication, with a soft 802.1D bridge inter-connecting different 802.3 compatible interfaces.

It is noted here that there are existing implementations in different operating systems already, for example QNX.

When implemented at an underwater hydrocarbon extraction facility, in practice these steps could be achieved by e.g.:
i) A SoC chip for converting serial / UART to a standard MII interface connected to a ASCI switch chip (hardware implementation); or
ii) A software virtualization running on an ASCI generic micro-processer, located within a subsea electronics module (SEM) (software implementation).

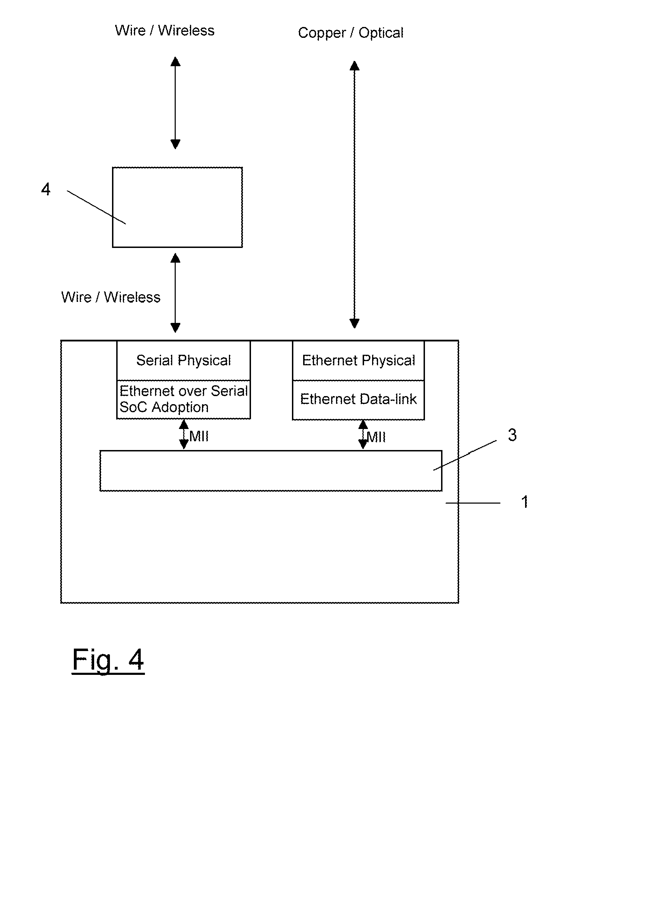

Fig. 4 schematically shows a hardware implementation of the present invention achieved by SoC hardware. The device 1 is shown having a serial input / output for wired / wireless connection, and a physical / data-link Ethernet input / output for copper or optical connection. The physical serial is converted to "Ethernet over Serial" as described in Step 1 above, using Ethernet over serial SoC adoption to convert serial / non-IEEE802 standard communication to an IEEE802 standard MII interface. An Ethernet switch 3, acting as an 802.1D bridge, interfaces between the "Ethernet over Serial", and the Ethernet data-link input / output. An optional variable speed copper modem 4 is also shown connected on the serial side, for example a powerline modem.

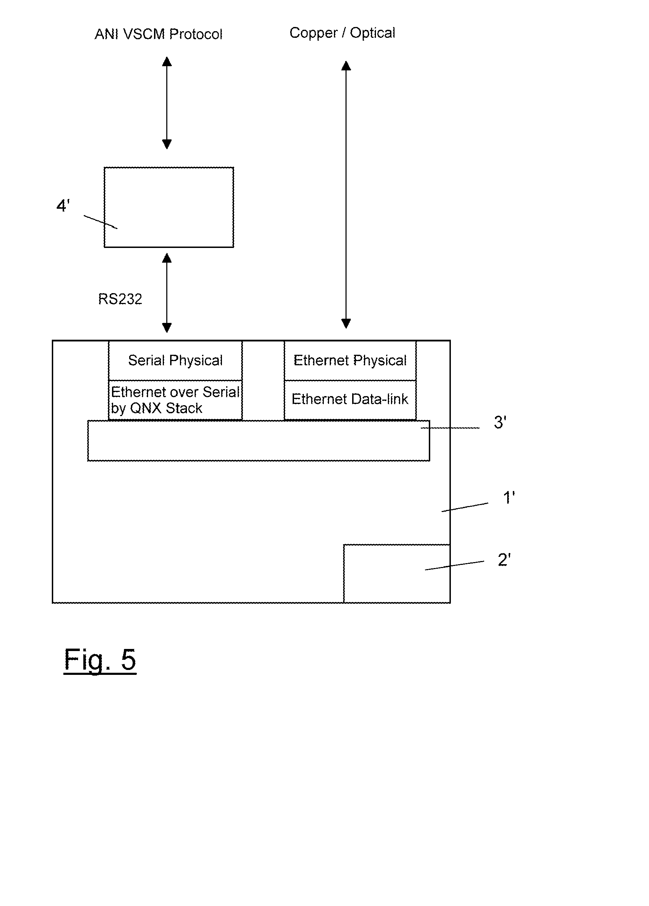

Fig. 5 schematically shows an implementation of the present invention achieved by software virtualization. A device 1' includes a microcontroller 2' for running virtualization software. The device 1' is shown having a physical serial input / output for RS232 connection, and a physical / data-link Ethernet input / output for copper or optical connection. The physical serial is converted to "Ethernet over serial" as described in Step 1 above, using software virtualisation (adoption). A soft / pseudo bridge 3', i.e. a soft implementation of an 802.1 D bridge interfaces between the "Ethernet over Serial", and the Ethernet data-link input / output. An optional variable speed copper modem 4' is also shown connected on the serial side, for example a powerline modem. This is shown as connecting to an ANI VSCM Protocol (wired or wireless) line.

As noted previously, QNX is already supplied with Ethernet over a serial stack and pseudo-device, and so that existing stack may be used to provide a working example of software adoption for testing the present invention.

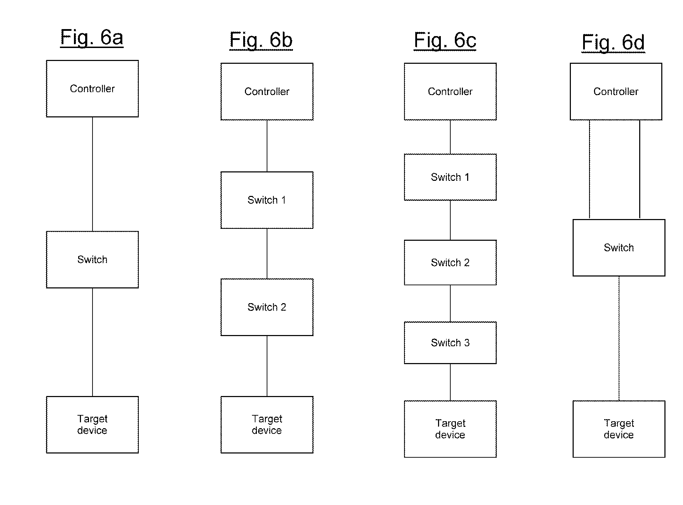

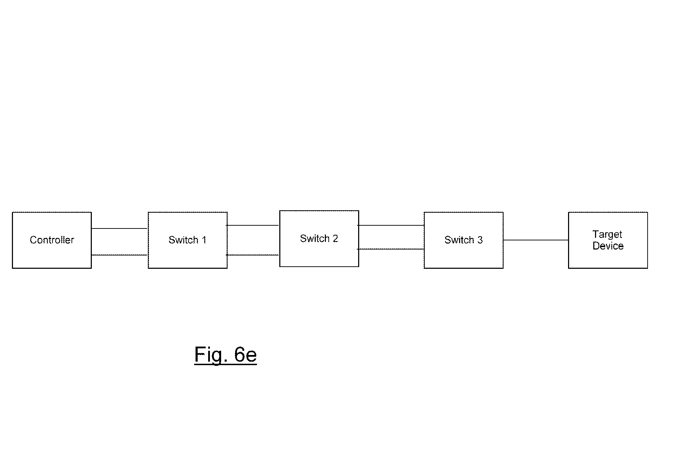

Figs. 6a-e schematically show the scenarios of Figs. 1a-e respectively, when treated in accordance with the present invention. As can be seen, each "middle" device of Fig. 1 now effectively functions as a "switch", i.e. in compliance with 802.1 D, exchanging the Ethernet frame at the data-link layer.

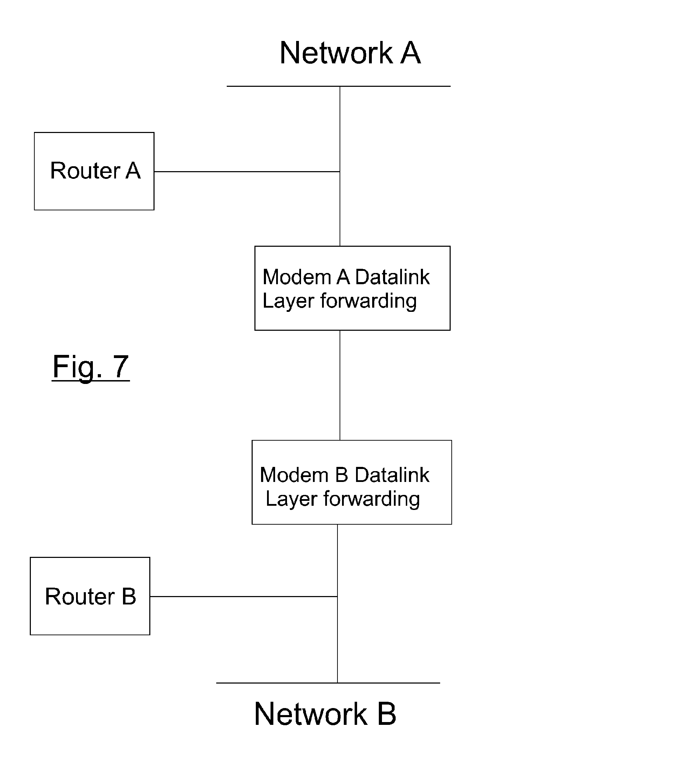

Fig. 7 schematically shows an exemplary network arrangement in accordance with the present invention. Comparing this with the conventional arrangement shown in Fig. 2, it can be seen that Network A connects to Network B via two modems A and B, which are operable for data-link layer data forwarding. It is noted here that all traffic needs to go through the pseudo bridge, which, as it is formed by layer device / software, is only able to handle data-link forwarding. Routers A and B are also connected to the system, these being unchanged from the conventional Fig. 2 system.

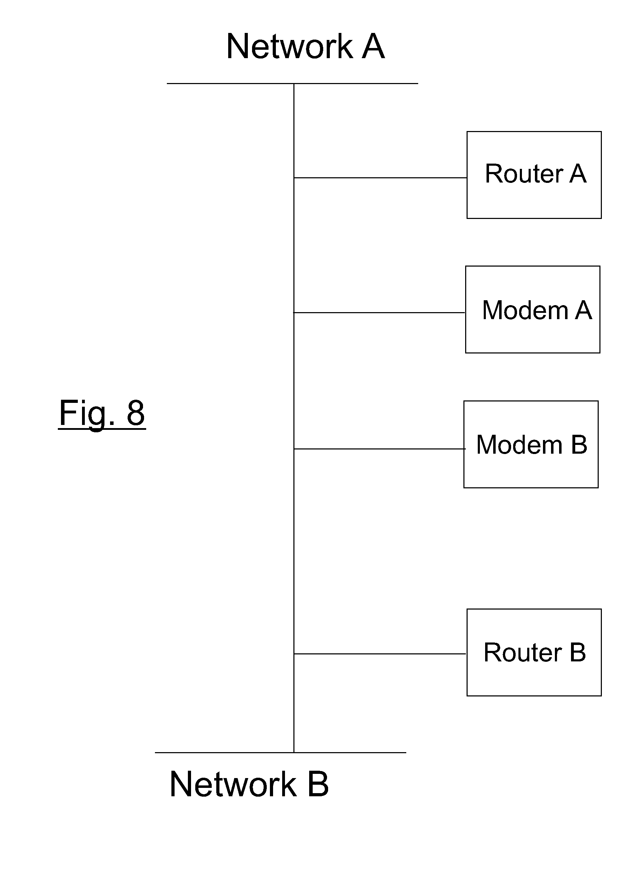

Fig. 8 schematically shows the functional arrangement of the network arrangement of Fig. 7, in other words, this figure shows how the arrangement of Fig. 7 would be "seen" by the system. Both routers A and B, and both modems A and B, are seen as being single node connected between networks A and B. This leads to simplified network design.

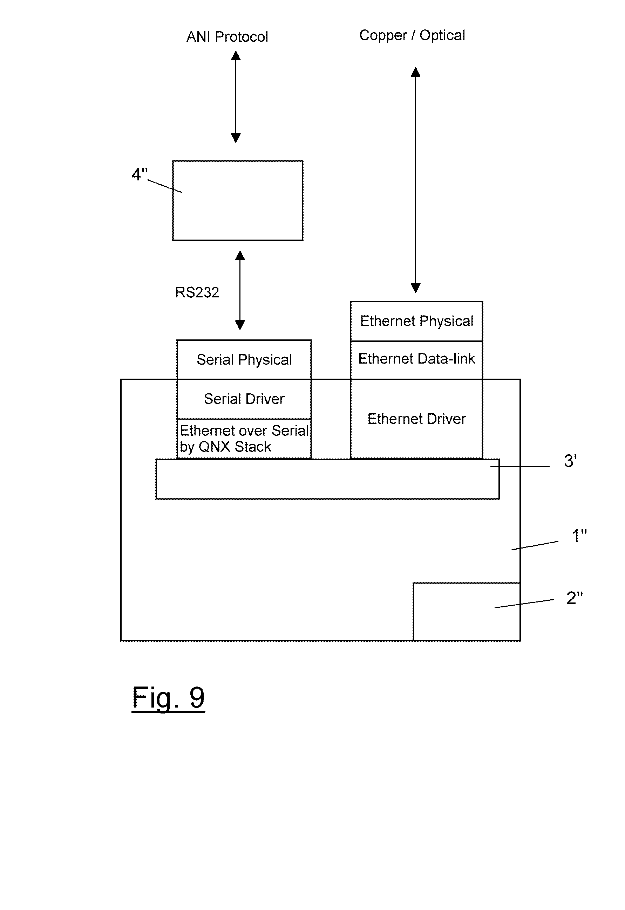

Fig. 9 shows a specific embodiment of the present invention suitable for use in an underwater hydrocarbon extraction facility, using software virtualization on a variable speed copper modem.

As shown, a power-line priority (ANI) protocol is physically converted to common RS232 communication by a ANI VSCM powerline modem unit 4" and interfaced to a UART controller at device 1 ".

Using a QNX operating system running on a Power-PC (MPC8313) microprocessor 2", a set of software packages works together doing the virtualization. These include:
1. Serial driver: providing a conventional method for the microprocessor 2" to access a serial device;
2. Ethernet driver: providing a conventional method for microprocessor 2" to access an Ethernet device;
3. Ethernet over serial provided by QNX stack: providing a similar method for microprocessor 2" to access the serial device as an Ethernet device; and
4. Bridge 3" provided by QNX stack: providing a bridge to inter-exchange information with different interfaces at the MAC level.

The above-described embodiments are exemplary only, and other possibilities and alternatives within the scope of the invention will be apparent to those skilled in the art. For example, although the invention has been described with particular emphasis on underwater well facilities, the invention is applicable to any network communications system.

## Claims

1. A network communications system for interfacing, within the data-link layer, a non-IEEE 802 compatible data communications network with an IEEE 802 compatible data communications network, the system comprising:
modems associated with each of the non-IEEE 802 compatible network and the IEEE 802 compatible network, said modems being configured to forward network data at the data-link layer,
means for interfacing the non-IEEE 802 compatible network protocol communication within an IEEE 802 compatible physical layer so that the non-IEEE 802 compatible layer frame appears as an IEEE 802 compatible layer frame, and
bridging means for interconnecting the IEEE 802 compatible network communication with the said interfaced non-IEEE 802 compatible network communication.

2. A network communications system according to claim 1, wherein the non-IEEE 802 compatible data communications network comprises a serial network, and the IEEE 802 compatible data communications network comprises an Ethernet network.

3. A network communications system according to either of claims 1 and 2, wherein the interfacing means comprises means for incorporating a MAC frame to pack the non-IEEE 802 compatible network protocol communication frame.

4. A network communications system according to claim 3, wherein the MAC layer is 802.3 compatible.

5. A network communications system according to any preceding claim, wherein the interfacing and bridging means comprise dedicated hardware.

6. A network communications system according to claim 5, wherein the interfacing means comprises means for converting the non-IEEE 802 compatible data communication to a Media Independent Interface.

7. A network communications system according to either of claims 5 and 6, wherein the bridging means comprises an 802.1 D compatible bridge.

8. A network communications system according to any of claims 1 to 4, wherein the interfacing and bridging means comprise dedicated software.

9. A network communications system according to claim 8, wherein the bridging means comprises an 802.1 D-compatible software bridge.

10. An underwater well facility comprising the network communications system according to any preceding claim.

11. A method for interfacing a non-IEEE 802 compatible data communications network with an IEEE 802 compatible data communications network, the non-IEEE 802 compatible data communications network and IEEE 802 compatible data communications network including protocol communication within their respective physical and data-link layers, the method comprising the steps of:
interfacing the non-IEEE 802 compatible data communications within an IEEE 802 compatible data communications physical layer so that the non-IEEE 802 compatible data communications frame appears as an IEEE 802 compatible data communications frame,
interconnecting the IEEE 802 compatible data communications network communication with the said interfaced non-IEEE 802 compatible data communications network communication using bridging means,
providing modems associated with each of the non-IEEE 802 compatible data communications and IEEE 802 compatible data communications networks, and forwarding data at the data-link layer via said modems.

12. A method according to claim 11, wherein the non-IEEE 802 compatible data communications comprise serial communications and the IEEE 802 compatible data communications comprise Ethernet communications.
